# EUROPEAN PATENT SPECIFICATION

(11) **EP 0 436 975 B1**
(45) Date of publication and mention of the grant of the patent: **28.09.1994**
(21) Application number: 90203244.0
(22) Date of filing: 11.12.1990
(51) Int. Cl.: A01B 29/06, A01B 49/06

(54) **A soil cultivating machine**
Bodenbearbeitungsmaschine
Machine pour le travail du sol

(30) Priority: 27.12.1989 NL 8903162
(43) Date of publication of application: 17.07.1991
(60) Divisional application: 94200275.9
(73) Proprietor: MAASLAND N.V., 3155 PD Maasland (NL)
(72) Inventor: van der Lely, Cornelis, CH - ZUG (CH)
(74) Representative: Mulder, Herman

(56) References cited:
- EP-A- 427 154
- EP-A- 0 271 119
- AU-B-58 706 /86
- DE-A- 2 528 930
- DE-A- 3 336 216
- DE-C- 8 350
- DE-C- 3 640 399
- DE-U- 8 706 550
- NL-A- 7 900 478
- US-A- 2 152 212

## Description

The invention relates to a soil cultivating machine, in particular for the preparation of a seed bed, comprising a frame carrying a plurality of power driven soil working members working the soil, which frame extends transversely to the direction of operative travel and is provided with a trestle for connecting the machine to the lifting hitch of a tractor, to the rear of which frame, relative to said direction, there is provided a roller for compacting the worked soil and controlling the working depth of the soil working members, the roller being the first machine part arranged to the rear of said frame for the purpose of substantially bearing at least part of the weight of the frame for the soil working members, which roller is hingeably coupled to the frame by means of arms extending at least substantially in the said direction and being hingeably coupled to the frame by means of shafts extending transversely to said direction, a cross-beam, which extends transversely to the said direction and substantially throughout the working width of the frame, being connected with a rear portion of said arms.

Such a machine is for instance known from DE-U-87 06 550.9. The roller of this machine comprises a central tube to which tyres are mounted, through the elasticity of which tyres, parts of the roller are capable of adaptation to modest unevennesses in the soil surface. The tyres are filled with foam material, prohibiting the entrance of soil material and maintaining or reinforcing the elasticity of the tyres. The working of such roller, however, can be improved still further when the machine should work on somewhat more uneven land. It is the object of the present invention to provide for a machine having a roller which is capable of sustaining the frame with the soil working members over its full working width in such a way that the pressure exerted by the roller onto the soil surface will be as equal as possible throughout the working width of the roller, even on rough or at least somewhat more uneven land. With a suchlike roller it should be realized that seed which is sown on uneven land will germinate and grow in equal pace, both on lower and on higher spots. According to the invention a machine capable of creating such a seed bed condition is characterized in that the roller consists of a plurality of roller elements (33), each of which elements being freely rotatable and movable upwardly and downwardly independently from each other by means of at least one carrier arm (31) carrying such roller element (33) and being hingeably coupled to the cross beam (27), the roller elements (33) being arranged in side-by-side relationship and a said carrier arm (31) being movable upwardly against the action of a spring element (44), acting between said cross beam (27) and the above side of the said carrier arm (31).

With a suchlike machine a seed bed can be realized which, also on uneven land, is compacted with a substantially constant pressure, thus creating substantially equal chances for the emerging of seeds, both on lower and on higher spots of the surface of a seed bed.

It is remarked that the German Offenlegungsschrift 25 28 930 discloses a combined machine comprising soil cultivating members and two rollers located to the rear thereof. The most rearwardly located roller of this machine comprises a cross beam extending transversely to the operative direction, to which cross beam there are coupled roller elements which are independently rotatable and movable upwardly against the pulling action of a spring member provided between the cross beam and the lower side of an arm of a roller element. This roller construction is hingeably coupled to a machine frame extending in the direction of operative travel by means of a parallelogram construction. Between an upper arm of this parallelogram construction and the mentioned frame a pull type spring element is provided, pulling the roller downwardly into the soil. The leading cultivating implement of this machine comprises spring loaded tines which are fixed within a frame extending transversely to the operative direction, to which frame also the intermediate roller is secured. The frame for the cultivating tines is coupled to the main frame by means of a parallelogram construction, so that the working depth of the cultivating elements relative to the intermediate roller cannot be altered. The working depth of the cultivating and rolling unit as a whole can be altered and secured by means of a hydraulic ram acting between the main frame and the parallelogram construction carrying the frame for the cultivating tines and the intermediate roller. Therefore, it is in the machine according to DE-A 25 28 930 not possible to control the working depth of the soil cultivating machine by means of the trailing pressure roller. Also the trailing roller is not very well suited to carry the weight of the frame with the soil working members and it is not disclosed how to adapt the trailing roller with independent roller elements such that a depth control can be realized. It is further remarked that the working members of the cultivating implement are, in contrast with the fixed members of a power driven cultivator, spring loaded and therefor capable of deflection independently from one another at encountering obstacles in the field. In contrast with the machine to which the invention is related there is therefor not a necessity for upward deflection of the cultivating frame as a whole relative to the trailing roller. Yet another difference with the machine relating to the invention is that the machine is to be carried by the lifting hitch of a tractor, therefor creating the need for a compact construction. The machine disclosed in DE-A-25 28 930 however, is of an elongated type which is pulled by the draw bar of a tractor. If the pressure roller is somehow brought closer to the working implements of a power driven implement these spring elements would quickly become stucked with earth, adversely affecting the action of said spring elements.

In a further preferred embodiment according to the invention a spring element comprises a pressure spring provided around a rod to which a stop is adaptably mounted, the rod preferably being threaded and the stop preferably being embodied by one or two nuts. In this way the necessary forces for sustaining the machine frame can favourably be transferred to the roller elements without lasting deformation of the said spring element. According to yet another favourable embodiment according to the invention the pivot shaft of a carrier arm is located between the axis of rotation of the corresponding roller element and the upper side thereof. In this way a favourable and compact construction can be realized.

A further feature of the invention relates to a soil cultivating machine of the above defined type, wherein the roller elements are in the form of boxes and seed drilling members are locate therebehind. Thus, there is obtained an implement which is perfectly suitable for direct precision sowing of grains, while, independently of the unevennesses in the soil, a uniform sowing depth can be maintained.

For a better understanding of the present invention and to show how the same may be carried into effect, reference will now be made, by way of example, to the accompanying drawings, in which:
Figure 1 is a schematic plan view of an implement in accordance with the invention;
Figure 2 is a view taken in the direction of the arrow II of Figure 1;
Figure 3 is, to an enlarged scale, a view taken on the line III - III in Figure 1;
Figure 4 is a view taken in the direction of the arrow IV in Figure 3, and
Figure 5 is a view taken in the direction of the arrow V in Figure 3.

The implement shown in the drawings comprises a soil cultivating machine 1, in particular one for preparing a seed bed. The machine includes a box-like frame portion 2 which extends transversely to the direction of operative travel A. Inside the frame portion 2 there are bearing-supported at equal interspaces of preferably 25 cms, the upwardly extending, preferably vertical, shafts 3 of soil working members 4. At the end of the shaft 3 projecting from the bottom side of the frame portion 2, each of the soil working members 4 includes a carrier 5, said carrier having near its ends downwardly extending soil working elements 6 in the form of tines. The ends of the box-like frame portion 2 are provided with upwardly extending plates 7 which are located at least substantially parallel to the direction of operative travel A.

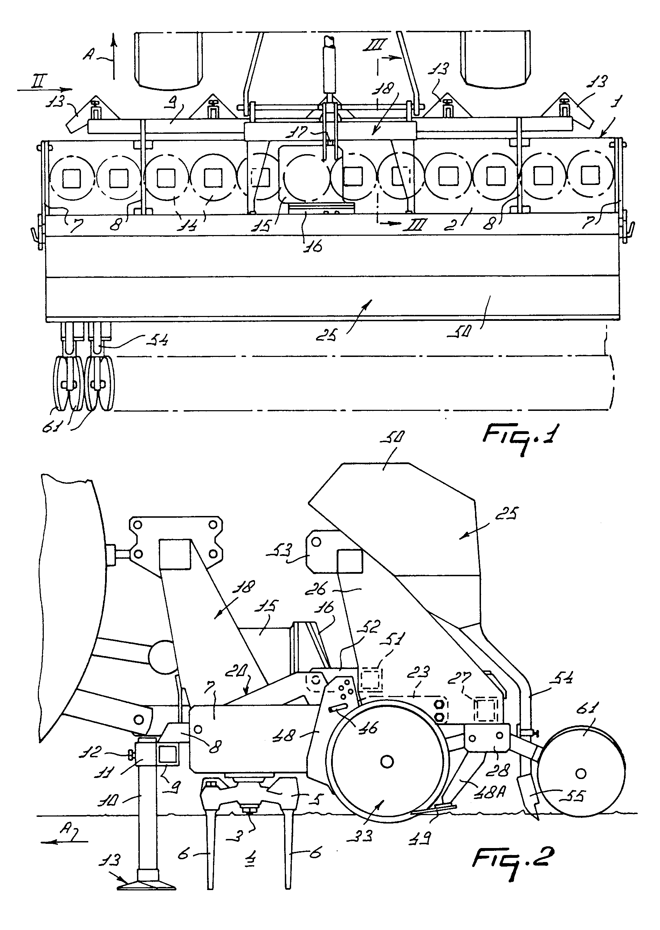

On the upper side of the frame portion 2, at some distance from its ends, there are arranged supports 8 which extend in the direction of operative travel A and, seen in plan view, extend to beyond the leading side thereof. To the supports 8 there is attached a beam 9 which extends parallel to the frame portion 2, to which beam 9 there are fitted by means of bushings 11 and clamping bolts 12 five downwardly extending, at least substantially vertical, carriers 10. The lower ends of the carriers 10 are provided with goosefoot-like soil working members 13 for working the subsoil. As is apparent from Figure 1, the soil working members 13 are distributed along the entire length of the beam 9. By means of the clamping bolts 12, the carriers 10 can be adjusted to a plurality of positions for setting the working depth of the goosefoot-like soil working members 13.

Inside the frame portion 2, a gear wheel 14 is mounted on each shaft 3 of a soil working member 4, the arrangement being such that the gear wheels 14 on the shafts of adjacent soil working members 4 are in driving connection with each other. Near the centre, the shaft 3 of a soil working member 4 is extended upwardly and reaches to into a gear box 15 arranged on the upper side of the frame portion 2. Inside the gear box 15, the extension is in driving connection with a shaft which extends in the direction of operative travel A and which via a speed variator 16 located at the rear side of the gear box is in driving connection with a superjacent shaft 17, which shaft 17 projects from the gear box 15 at the leading side and can be coupled to the power take-off shaft of a tractor via an intermediate shaft.

On the upper side of the frame portion 2 there is arranged a trestle 18 which encloses the gear box and at its leading side is provided with coupling means for coupling the machine to the three-point lifting hitch of a tractor.

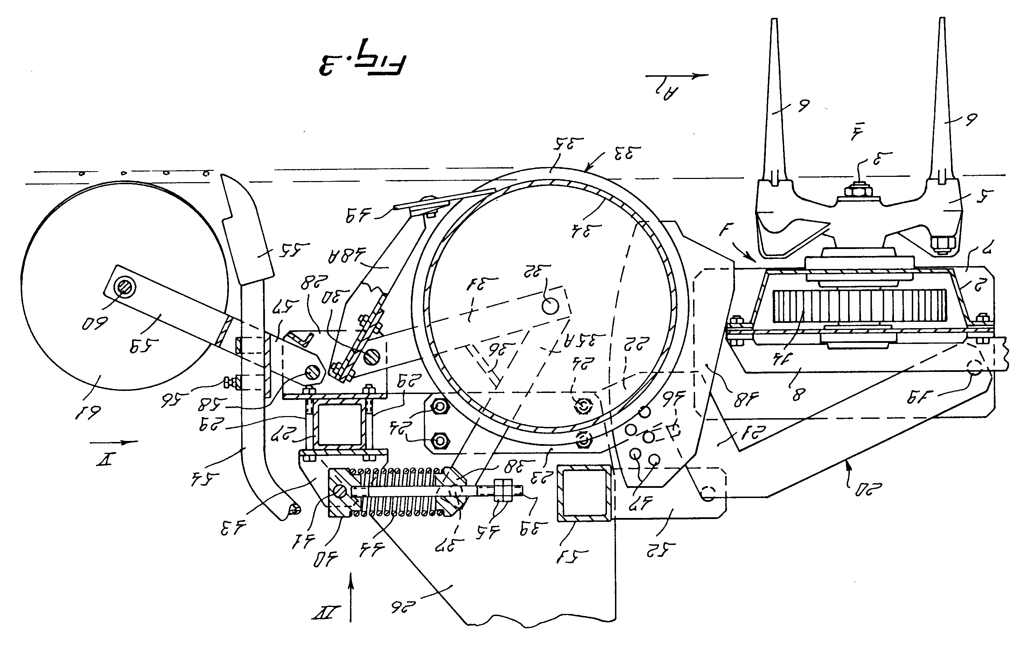

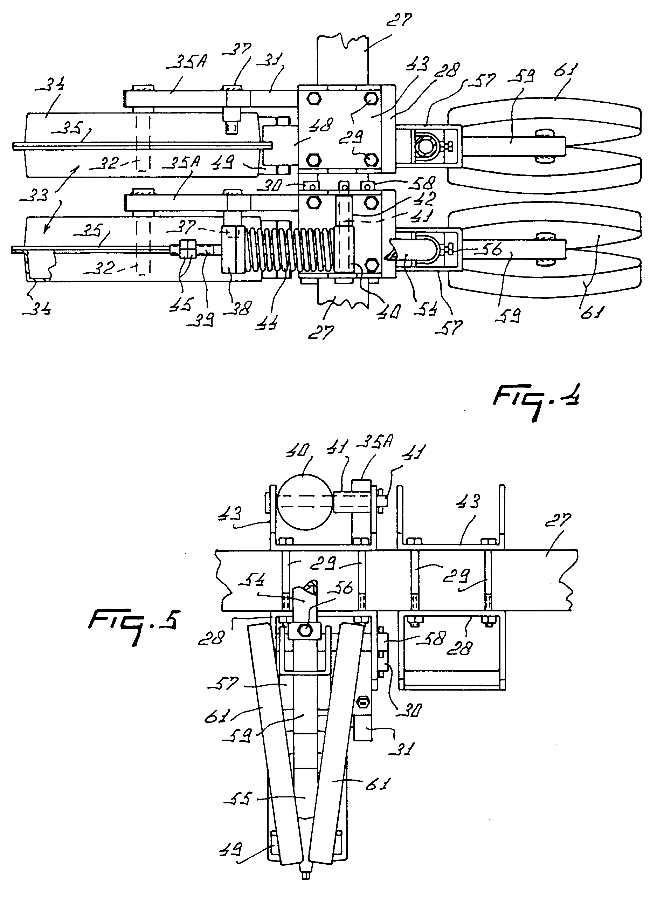

Near its leading side, each of the plates 7 is fitted with a shaft 19 which extends transversely to the direction of operative travel A, the arrangement being such that the longitudinal centre lines of the shafts 19 are in alignment. About each of the shafts 19 there is arranged pivotably an arm 20 which extends rearwardly along a plate 7, which arm 20, seen in plan view, is folded downwardly in a position just behind the box-like frame portion 2 through a portion 21. The portion 21 merges into a portion 22 which extends obliquely upwardly and rearwardly and in its turn merges into a rearwardly extending, at least substantially horizontal portion 23. A seed drill 25 is bolted to the horizontal portion 23 of the arms 20 by means of bolts 24. The seed drill 25 includes upwardly directed plates 26 which extend into the direction of operative travel A and by means of the bolts 24 are connected detachably to the portion 23 of the arms 20. The plates 26 are interconnected at the rear side by means of a cross-beam 27. The beam 27, which is located near the portion 23 of the arms 20, is provided at its lower side with U-shaped portions 28, the legs of which extend downwardly. As is apparent from Figures 4 and 5, the U-shaped portions 28 are located at a short distance from each other and are secured by means of bolts 29. Between the legs of each of the U-shaped portions 28 there is arranged pivotably by means of a horizontal transverse shaft 30 an arm 31 which extends obliquely downwardly and forwardly from a portion 28. The leading end of each arm 31 supports a roller element 33 by means of an at least substantially horizontal shaft 32 extending transversely to the direction of operative travel. Each roller element 33 consists of two portions 34 which are each other's mirror image and are interconnected near the centre thereof, thereby forming an outwardly extending edge 35. The shaft 32 is furthermore supported by an arm 35A which extends obliquely upwardly and rearwardly from the shaft 32 and is connected to the arm 31 by means of a supporting strip 36 (Figure 3). The upper end of the arm 35A is connected pivotably via a shaft 37 to a block 38 which is slidable along a rod 39. The one end of the rod 39 is arranged pivotably by means of a block 40, a shaft 41 and an adapter bushing 42 between the upwardly directed legs of U-shaped portions 43 which are bolted to the upper side of the beam 27 by means of the bolts 29. A pressure spring 44 is provided around the rod 39 between the blocks 38 and 40. The other end of the rod 39 is a threaded one having screwed thereon two nuts 45, the arrangement being such that the nuts constitute a stop for the slidable block 38 attached to the arm 35A. Thus, each roller element 33 can deflect upwardly under spring action and, during operation, it is pushed against the soil, so that unevennesses in the soil can easily be followed. The adjacent roller elements 33, which are movable in height independently of each other, together constitute a roller, by means of which the soil cultivating machine is also supported during operation. To that end the frame portion 2 can bear on the portion 22 of the arms 20 via pins 46, so that it can deflect upwardly when meeting an obstacle. The pins 46 can be inserted into one of a plurality of apertures 47 provided in supports 48 connected to the rear side of the plates 7. By means of the pins 46, it is possible to adjust the working depth of the soil working members 4. Between the legs of each U-shaped portion 28, an arm 31 is provided with an obliquely downwardly and forwardly extending carrier 48A which at its lower end is fitted with a scraper 49 having near its centre a slot to receive the edge 35 of a roller element 33, while the leading sides of the scraper portions located on either sides of the edge 35 extend to the circumference thereof (Figure 3). The seed drill 25 includes a hopper 50 accommodating a discharge mechanism which may be designed and be driven in a known per se manner. At their leading sides there are arranged between the plates 26, near the upper and lower ends thereof, cross beams 51 which are provided with attachment means 52 and 53, by means of which the seed drill, if employed as the only implement, can be coupled to the three-point lifting hitch of a tractor. The hopper 50 of the seed drill 25 is fitted with downwardly extending seed delivery tubes 54 which end in a seed coulter 55. With the aid of a clamping bolt 56, each seed delivery tube 54 is adjustable in height relative to a bracket-shaped support 57 which is arranged pivotably between the legs of a U-shaped portion 28 by means of a shaft 58. Each support 57 supports an arm 59 which extends obliquely downwardly and rearwardly. The lower end of each arm 59 is provided on both sides with a shaft 60 for two adjacent pressure rollers 61 which, taken in the direction of operative travel A, are arranged relative to each other in the shape of a V.

During travel of the above-described implement in a direction indicated by the arrow A, in which situation the trestle of the soil cultivating machine 1 is connected to the three-point lifting hitch of a tractor via the three-point coupling, the soil working members 4 can be driven from the power take-off shaft via the intermediate shaft and the above-described transmission - adjacent soil working members rotating in opposite directions - and they work at least contiguous strips of soil by means of their tine-like soil working elements 5, after the soil has been loosened effectively by the goosefoot-like soil working members 13 at a depth which substantially corresponds to the working depth of the soil working elements 4. The soil worked thus is slightly compressed by the roller elements 33, while by the edge 35 there is made a furrow in which, because every seed coulter 55 is located directly behind a roller element 33, the seed material is deposited. Thereafter, the furrow thus obtained is closed by means of the V-shaped pressure rollers 61.

The above-described implement is eminently suitable for sowing grains, the spring-loaded support of the assembly by means of the spring-loaded roller elements 33 ensuring an accurate sowing. During operation, the frame portion 2 of the soil cultivating machine 1 can move in height relative to the arms 20, as a result of which a floating support of the machine is obtained.

The above-described seed drill 25 can be detached from the arms 20 after the bolts 24 have been loosened, and be attached for individual use to the three-point lifting hitch of a tractor by means of the coupling means 52, 53. During drilling, a constant sowing depth can be maintained, because the roller elements 33 located before each of the seed coulters 55 can adapt themselves in an excellent manner to prevailing soil unevennesses, so that even in possible wheel tracks the sowing can be effected at the same depth as in the intermediate strip of soil.

The invention is not limited to the features described in the foregoing, but also relates to all the details of the drawings, whether they have been described or not, however the invention is limited to the features as claimed.

## Claims

1. A soil cultivating machine (1), in particular for the preparation of a seed bed, comprising a frame (2) carrying a plurality of power driven soil working members (4) working the soil, which frame (2) extends transversely to the direction of operative travel and is provided with a trestle (18) for connecting the machine to the lifting hitch of a tractor, to the rear of which frame (2), relative to said direction, there is provided a roller for compacting the worked soil and controlling the working depth of the soil working members, the roller being the first machine part arranged to the rear of said frame (2) for the purpose of substantially bearing at least part of the weight of the frame (2) for the soil working members (4), which roller is hingeably coupled to the frame by means of arms (20) extending at least substantially in the said direction and being hingeably coupled to the frame (2) by means of shafts (17) extending transversely to said direction, a cross-beam (27), which extends transversely to the said direction and substantially throughout the working width of the frame (2), being connected with a rear portion (23) of said arms (20), characterized in that the roller consists of a plurality of roller elements (33), each of which elements being freely rotatable and movable upwardly and downwardly independently from each other by means of at least one carrier arm (31) carrying such roller element (33) and being hingeably coupled to the cross beam (27), the roller elements (33) being arranged in side-by-side relationship and a said carrier arm (31) being movable upwardly against the action of a spring element (44), acting between said cross beam (27) and the above side of the said carrier arm (31).

2. A soil cultivating machine (1) as claimed in claim 1, characterized in that the spring element comprises a pressure spring provided around a rod (39) to which a stop (45) is adaptably mounted, the rod prefarably being threaded and the stop prefarably being embodied by one or two nuts.

3. A soil cultivating machine (1) as claimed in claim 1 or 2, characterized in that the pivot shaft (30) of a carrier arm (31) is located between the axis of rotation (32) of the corresponding roller element (33) and the upper side thereof.

4. A soil cultivating machine (1) as claimed in claim 1, 2 or 3, characterized in that a roller element (33) is provided with at least one scraper (49) which is rigidly connected to a carrier arm (31).

5. A soil cultivating machine (1) as claimed in any one of the preceding claims, characterized in that for the roller element (33) there are present two carrier arms (31, 35A), one (31) of which is arranged capably of pivoting about the pivot shaft (30) and the other (35A) is connected pivotably to a pivotal rod (39), around which the pressure spring (44) is arranged.

6. A soil cultivating machine (1) as claimed in any one of the preceding claims, characterized in that the pivot shaft (30) of a carrier arm (31) is located, taken in the direction of operative travel, behind the corresponding roller element (33).

7. A soil cultivating machine (1) as claimed in any one of the preceding claims, characterized in that the roller elements (33) are in the form of boxes (34, 35) arranged in side-by-side relationship, and in that seed drilling members (54, 55) are located therebehind.

8. A soil cultivating machine (1) as claimed in any one of the preceding claims, characterized in that a roller element (33) consists of two identical portions (34) and at the circumference is provided near its centre with an outwardly extending edge (35).

9. A soil cultivating machine (1) as claimed in claim 8, characterized in that, near its centre, a scraper (49) is provided with a recess for receiving the edge (35) on a corresponding roller element (33).

10. A soil cultivating machine (1) as claimed in claim 7, characterized in that behind each roller element (33) there is located a height-adjustable seed coulter (55) for introducing seed material into the furrow made by the edge (35) of a roller element (33).

11. A soil cultivating machine as claimed in claim 10, characterized in that seed delivery tubes (54) are provided practically vertically within the machine.

12. A soil cultivating machine (1) as claimed in claim 10 or 11, characterized in that behind each seed coulter (55) there are arranged means (61) for closing the furrow, preferably constituted by pressure rollers arranged in the shape of a V.

13. A soil cultivating machine (1) as claimed in claim 12, characterized in that a seed coulter (55) is movable in height together with the means for closing the furrow (61).

14. A soil cultivating machine (1) as claimed in any one of the preceding claims, characterized in that, together with the seed coulter (55) and the pressure roller (61), the roller elements (33) constitute part of a seed drill (25) which is connected detachably to the soil cultivating machine (1) and is provided with coupling means for coupling to the three-point lifting hitch of a tractor.

15. A soil cultivating machine (1) as claimed in any one of the preceding claims, characterized in that the seed drill (25) is connected detachably to arms (52), on which arms (52) a frame portion (2) carrying the soil working members (4) of the soil cultivating machine (1) is supported capably of movement in height.

## Patentansprüche

1. Bodenbearbeitungsmaschine (1), insbesondere zur Bereitung eines Saatbettes, mit einem Traggestell (2), an dem mehrere angetriebene, den Boden bearbeitende Bodenbearbeitungsglieder (4) angeordnet sind, das sich quer zur Arbeitsrichtung erstreckt, und das mit einem Anbaubock (18) zum Anschluß der Maschine an die Hebevorrichtung eines Schleppers versehen ist, wobei an der relativ zu dieser Richtung hinteren Seite des Traggestelles (2) eine Walze zum Verdichten des bearbeiteten Bodens und zur Tiefenführung der Bodenbearbeitungsglieder vorgesehen ist, wobei die Walze den ersten Teil der Maschine bildet, der an der Rückseite des Traggestelles (2) angeordnet ist, um im wesentlichen zumindest einen Teil des Gewichtes des die Bodenbearbeitungsglieder (4) tragenden Gestelles (2) aufzunehmen, und wobei die Walze mit dem Traggestell mittels Armen (20) schwenkbar verbunden ist, die sich zumindest im wesentlichen in die genannte Richtung erstrecken und mit dem Traggestell (2) mittels sich quer zu dieser Richtung erstreckender Achsen (19) schwenkbar verbunden sind, und wobei ferner ein Querbalken (27), der sich quer zu dieser Richtung und im wesentlichen über die gesamte Arbeitsbreite des Traggestelles (2) erstreckt, mit einem hinteren Teil (23) dieser Arme (20) verbunden ist,
dadurch gekennzeichnet, daß die Walze aus mehreren Walzenelementen (33) besteht, von denen jedes mittels mindestens eines Tragarmes (31), der dieses Walzenelement (33) trägt und mit dem Querbalken (27) schwenkbar verbunden ist, frei drehbar und unabhängig von den anderen Walzenelementen höhenbeweglich angeordnet ist, wobei die Walzenelemente (33) nebeneinander angeordnet sind, und wobei ein Tragarm (31) gegen die Kraft eines Federelementes (44) nach oben bewegbar ist, das zwischen dem Querbalken (27) und der oberen Seite des Tragarmes (31) wirksam ist.

2. Bodenbearbeitungsmaschine (1) nach Anspruch 1,
dadurch gekennzeichnet, daß das Federelement aus einer eine Stange (39) umgebenden Druckfeder besteht, wobei an der Stange ein Anschlag (45) einstellbar befestigt ist, und wobei die Stange vorzugsweise mit einem Gewinde versehen und der Anschlag vorzugsweise durch eine oder zwei Muttern gebildet ist.

3. Bodenbearbeitungsmaschine (1) nach Anspruch 1 oder 2,
dadurch gekennzeichnet, daß die Schwenkachse (30) eines Tragarmes (31) zwischen der Drehachse (32) des zugehörigen Walzenelementes (33) und dessen Oberseite angeordnet ist.

4. Bodenbearbeitungsmaschine (1) nach Anspruch 1, 2 oder 3,
dadurch gekennzeichnet, daß ein Walzenelement (33) mit mindestens einem Abstreifer (49) versehen ist, der mit einem Tragarm (31) starr verbunden ist.

5. Bodenbearbeitungsmaschine (1) nach einem der vorhergehenden Ansprüche,
dadurch gekennzeichnet, daß für das Walzenelement (33) zwei Tragarme (31, 35A) vorgesehen sind, wobei der eine Tragarm (31) um die Schwenkachse (30) schwenkbar angeordnet und der andere (35A) mit einer schwenkbaren Stange (39) schwenkbar verbunden ist, die von der Druckfeder (44) umgeben ist.

6. Bodenbearbeitungsmaschine (1) nach einem der vorhergehenden Ansprüche,
dadurch gekennzeichnet, daß die Schwenkachse (30) eines Tragarmes (31) in bezug auf die Arbeitsrichtung hinter dem zugehörigen Walzenelement (33) angeordnet ist.

7. Bodenbearbeitungsmaschine (1) nach einem der vorhergehenden Ansprüche,
dadurch gekennzeichnet, daß die Walzenelemente (33) in Form von nebeneinander angeordneten Hohlkörpern (34, 35) ausgeführt und daß hinter ihnen Drillglieder (54, 55) angeordnet sind.

8. Bodenbearbeitungsmaschine (1) nach einem der vorhergehenden Ansprüche,
dadurch gekennzeichnet, daß ein Walzenelement (33) aus zwei gleichen Teilen (34) besteht und am Umfang nahe seiner Mitte einen nach außen gerichteten Flansch (35) aufweist.

9. Bodenbearbeitungsmaschine (1) nach Anspruch 8,
dadurch gekennzeichnet, daß ein Abstreifer (49) nahe seiner Mitte eine Ausnehmung zur Aufnahme des an einem zugehörigen Walzenelement (33) angeordneten Flansches (35) aufweist.

10. Bodenbearbeitungsmaschine (1) nach Anspruch 7,
dadurch gekennzeichnet, daß hinter jedem Walzenelement (33) ein höhenverstellbares Säschar (55) angeordnet ist, um in die von dem Flansch (35) eines Walzenelementes (33) gezogene Furche Saatgut einzubringen.

11. Bodenbearbeitungsmaschine nach Anspruch 10,
dadurch gekennzeichnet, daß in der Maschine Saatzuführrohre (54) praktisch vertikal angeordnet sind.

12. Bodenbearbeitungsmaschine (1) nach Anspruch 10 oder 11,
dadurch gekennzeichnet, daß hinter jedem Säschar (55) eine Vorrichtung (61) zum Schließen der Furche angeordnet ist, die vorzugsweise durch V-förmig angeordnete Druckrollen gebildet ist.

13. Bodenbearbeitungsmaschine (1) nach Anspruch 12,
dadurch gekennzeichnet, daß ein Säschar (55) zusammen mit der Vorrichtung zum Schließen der Furche (61) höhenbeweglich ist.

14. Bodenbearbeitungsmaschine (1) nach einem der vorhergehenden Ansprüche,
dadurch gekennzeichnet, daß die Walzenelemente (33) zusammen mit dem Säschar (55) und der Druckrolle (61) Teil einer Drillmaschine (25) sind, die mit der Bodenbearbeitungsmaschine (1) lösbar verbunden und mit einer Anschlußvorrichtung zum Anschluß an die Dreipunkt-Hebevorrichtung eines Schleppers versehen ist.

15. Bodenbearbeitungsmaschine (1) nach einem der vorhergehenden Ansprüche,
dadurch gekennzeichnet, daß die Drillmaschine (25) mit Armen (52) lösbar verbunden ist, an welchen ein die Bodenbearbeitungsglieder (4) der Bodenbearbeitungsmaschine (1) tragendes Traggestell (2) höhenbeweglich abgestützt ist.

## Revendications

1. Machine pour le travail du sol (1), en particulier pour la préparation d'un lit de semis, comprenant un châssis (2) portant une pluralité d'organes de travail du sol motorisés (4) travaillant le sol, lequel châssis (2) s'étend transversalement au sens de marche du travail et est muni d'un chevalet (18) pour relier la machine au dispositif d'attelage-levage d'un tracteur, à l'arrière duquel châssis (2), par rapport audit sens de marche, est prévu un rouleau pour compacter le sol travaillé et pour commander la profondeur de travail des organes de travail du sol, le rouleau étant la première partie de la machine disposée à l'arrière dudit châssis (2) dans le but de supporter substantiellement au moins une partie du poids du châssis (2) pour les organes de travail du sol (4), lequel rouleau est relié de manière articulée au châssis au moyen de bras (20) s'étendant au moins substantiellement dans ledit sens de marche et, étant reliés de manière articulée au châssis (2) au moyen d'arbres (19) s'étendant transversalement audit sens de marche, une poutre-traverse (27) qui s'étend transversalement audit sens de marche et substantiellement sur toute la largeur du travail du châssis (2) en étant reliée à une partie postérieure (23) desdits bras (20),
**caractérisée** en ce que le rouleau consiste en une pluralité d'éléments de rouleau (33), chacun de ces éléments étant librement rotatif et mobile vers le haut et vers le bas, indépendamment de chacun des autres, au moyen d'au moins un bras porteur (31) portant ces éléments de rouleau (33) et étant relié de manière articulée à la poutre-traverse (27), les éléments de rouleau étant disposés côte à côte et un desdits bras porteurs (31) étant mobile vers le haut contre l'action d'un élément à ressort (44) agissant entre ladite poutre-traverse (27) et le côté supérieur dudit bras porteur (31).

2. Machine pour le travail du sol (1) selon la revendication 1, caractérisée en ce que l'élément à ressort comprend un ressort de pression prévu autour d'une tige (39) sur laquelle est montée une butée réglable (45), la tige étant de préférence filetée et la butée étant constituée, de préférence, par un ou deux écrous.

3. Machine pour le travail du sol (1) selon la revendication 1 ou 2, caractérisée en ce que l'arbre-pivot (30) d'un bras porteur (31) est situé entre l'axe de rotation (32) de l'élément de rouleau (33) correspondant et le côté supérieur de celui-ci.

4. Machine pour le travail du sol (1) selon la revendication 1, 2 ou 3, caractérisée en ce qu'un élément de rouleau (33) est muni d'au moins un racleur (49) qui est relié rigidement à un bras porteur (31).

5. Machine pour le travail du sol (1) selon l'une quelconque des revendications précédentes, caractérisé en ce que, pour l'élément de rouleau (33), sont présents deux bras porteurs (31, 35A), l'un desquels (31) est monté pivotant autour de l'arbre-pivot (30) et l'autre (35A) est relié de manière pivotante à une tige pivotante (39) autour de laquelle est disposé le ressort de pression (44).

6. Machine pour le travail du sol (1) selon l'une quelconque des revendications précédentes, caractérisée en ce que l'arbre-pivot (30) d'un bras porteur (31) est situé, en étant vu dans le sens de marche du travail, derrière l'élément de rouleau (33) correspondant.

7. Machine pour le travail du sol (1) selon l'une quelconque des revendications précédentes, caractérisée en ce que les éléments de rouleau (33) sont sous la forme de boîtes (34, 35) disposées côte à côte, et en ce que des organes semeurs (54, 55) sont situés derrière ceux-ci.

8. Machine pour le travail du sol (1) selon l'une quelconque des revendications précédentes, caractérisée en ce qu'un élément de rouleau (33) consiste en deux parties (34) identiques, et est muni sur sa circonférence, près de son milieu, d'un bord (35) s'étendant vers l'extérieur.

9. Machine pour le travail du sol (1) selon la revendication 8, caractérisée en ce qu'un racleur (49) est muni, près de son centre, d'un renfoncement pour recevoir le bord (35) sur un élément de rouleau (33) correspondant.

10. Machine pour le travail du sol (1) selon la revendication 7, caractérisée en ce que, derrière chaque élément de rouleau (33), est situé un coutre semeur (55) réglable en hauteur pour introduire de la semence dans le sillon fait par le bord (35) d'un élément de rouleau (33).

11. Machine pour le travail du sol selon la revendication 10, caractérisée en ce que des tubes (54) distributeurs de semence sont prévus, pratiquement verticalement à l'intérieur de la machine.

12. Machine pour le travail du sol (1) selon la revendication 10 ou 11, caractérisée en ce que derrière chaque coutre semeur (55) sont disposés des moyens (61) pour refermer le sillon, constitués de préférence par des rouleaux presseurs disposés en forme de V.

13. Machine pour le travail du sol (1) selon la revendication 12, caractérisée en ce qu'un coutre semeur (55) est mobile en hauteur, ensemble avec le moyen (61) pour refermer le sillon.

14. Machine pour le travail du sol (1) selon l'une quelconque des revendications précédentes, caractérisée en ce, qu'ensemble avec le coutre semeur (55) et le rouleau de pression (61), les éléments de rouleau (33) constituent une partie d'un semoir (25) qui est relié de manière amovible à la machine pour le travail du sol (1) et qui est muni de moyens de couplage pour l'atteler au dispositif d'attelage-levage à trois points d'un tracteur.

15. Machine pour le travail du sol (1) selon l'une quelconque des revendications précédentes, caractérisée en ce que le semoir (25) est relié de manière amovible à des bras (52), sur lesquels bras (52) une partie de châssis (2) portant les organes de travail du sol (4) de la machine pour le travail du sol (1) est supportée en étant capable de mouvement en hauteur.
